# FASCICULE DE BREVET EUROPEEN

(11) **EP 2 576 170 B1**
(45) Date de publication et mention de la délivrance du brevet: **11.06.2014**
(21) Numéro de dépôt: 11727214.6
(22) Date de dépôt: 17.05.2011
(51) Int. Cl.: B29C 35/16, B29C 41/26, B29C 41/46, B29C 55/14

(54) **ENSEMBLE DE REFROIDISSEMENT D'UN FILM EN MATIÈRE SYNTHÉTIQUE**
EINHEIT ZUR KÜHLUNG EINER FOLIE AUS SYNTHETISCHEM MATERIAL
UNIT FOR COOLING A FILM MADE OF SYNTHETIC MATERIAL

(30) Priorité: 02.06.2010 FR 1054290
(43) Date de publication de la demande: 10.04.2013
(73) Titulaire: Darlet, Jean-Pierre, 2100 Shanghai (CN)
(72) Inventeur: Darlet, Jean-Pierre, 2100 Shanghai (CN)
(74) Mandataire: Delorme, Nicolas
(86) Numéro de dépôt international: PCT/FR2011/051096
(87) Numéro de publication internationale: WO 2011/151556

(56) Documents cités:
- EP-A1- 1 375 929
- BE-A- 679 025
- FR-A- 1 455 671
- FR-A- 1 597 448
- FR-A1- 2 113 924
- US-A- 4 749 535
- US-A1- 2002 015 751

## Description

La présente invention concerne un ensemble de refroidissement d'un film en matière synthétique, et de préférence d'un film en matière synthétique bi-orienté.

Le document US 4 749 535 décrit un ensemble de refroidissement selon le préambule de la revendication 1.

Les films de matière synthétique bi-orientés sont obtenus à partir d'un ruban extrudé, après que de la matière à l'état fondu (polypropylène, polyester, polyamide, pvc, etc.) ait été déposée sur un tambour de coulée, ou tambour de refroidissement, refroidi par circulation de fluide de façon à ralentir la cristallisation du film et à permettre son étirage ultérieur.

Le ruban extrudé, refroidi dans un bac de refroidissement après son passage sur le tambour de coulée, passe ensuite dans une machine d'étirage longitudinal équipée de cylindres de préchauffage destinés à réchauffer le ruban à la température d'étirage, et d'un train de cylindres entraînés à des vitesses différentes et destinés à étirer longitudinalement le ruban.

Le ruban ainsi étiré dans le sens longitudinal pénètre ensuite dans une machine d'étirage transversal qui comporte deux groupes de pinces qui prennent respectivement le ruban sur ses deux côtés, les deux groupes de pinces étant montés sur des chaines dont l'écartement augmente progressivement jusqu'à atteindre la largeur désirée.

Lorsque cette opération d'étirage a été réalisée, un dispositif approprié ouvre les pinces et permet au film ainsi constitué d'être transféré, après refroidissement sur un ensemble de cylindres, à un dispositif d'enroulement au niveau duquel le film est enroulé sur un rouleau de stockage.

Un ensemble de refroidissement formé par un tambour de refroidissement et un bac de refroidissement nécessite actuellement l'utilisation d'un groupe refroidisseur produisant de l'eau à une température de 10 à 11°C destinée à alimenter un échangeur eau / eau qui permet le maintien à une température d'environ 35°C de l'eau circulant dans deux circuits différents, l'un alimentant une circulation interne au tambour de coulée, l'autre alimentant une circulation interne au bac de refroidissement.

La circulation interne au tambour de coulée est réalisée, dans le stade actuel de la technique, par la circulation d'eau à l'intérieur de canaux hélicoïdaux, croisés ou non, s'étendant le long de la face interne du tambour de coulée, ou par l'utilisation de jets d'eau projetant de l'eau sur la face interne de ce dernier.

Afin d'obtenir un film en matière synthétique transformable par la suite dans des conditions optimales, il est essentiel que le tambour de refroidissement d'une part présente une très grande régularité de température sur toute sa surface destinée à être en contact avec le film, et d'autre part assure un refroidissement rapide de ce dernier.

De ce fait, la circulation interne au tambour de coulée nécessite des débits importants, donc l'utilisation de pompes de grande puissance qui sont consommatrices d'énergie compte tenu de la complexité du circuit qui prévoit échangeurs, filtres, joints tournants, etc., et qui implique des pertes de charge élevées.

Le circuit interne au bac de refroidissement prévoit, dans le stade actuel de la technique, une circulation importante des quantités d'eau généralement injectées dans le bac de refroidissement grâce à des rampes qui présentent des pertes de charge importantes et nécessitent également la présence de pompes consommatrices d'énergie.

Ainsi, un tel ensemble de refroidissement est donc très consommateur d'énergie, non seulement au niveau du groupe froid, mais également au niveau des pompes de circulation nécessaires au fonctionnement des circuits de refroidissement.

La présente invention vise à remédier à ces inconvénients.

Le problème technique à la base de l'invention consiste donc à fournir un ensemble de refroidissement qui soit de structure simple, et qui permette de réduire dans des proportions significatives les dépenses d'énergie nécessaires pour la production d'un film en matière synthétique.

A cet effet, la présente invention concerne un ensemble de refroidissement d'un film en matière synthétique, comportant :
- un bac de refroidissement rempli au moins en partie par un liquide caloporteur, et
- un tambour de refroidissement au moins partiellement immergé dans le bac de refroidissement,
caractérisé en ce que le tambour de refroidissement comprend une virole présentant deux joues latérales au moins partiellement ajourées de telle sorte que l'intérieur de la virole est au moins partiellement rempli par le liquide caloporteur, et en ce que le bac de refroidissement comporte au moins une bouche d'alimentation en liquide caloporteur agencée pour alimenter en liquide caloporteur le bac de refroidissement, l'au moins une bouche d'alimentation en liquide caloporteur étant située en regard de l'une des joues de la virole.

Le fait que le tambour de refroidissement soit immergé dans le bac de refroidissement et que l'intérieur de la virole baigne directement dans le liquide caloporteur contenu dans le bac de refroidissement permet, du fait de l'agitation du volume de liquide caloporteur compris à l'intérieur de la virole du tambour lors de sa rotation, d'homogénéiser la température du volume important de liquide caloporteur contenu à l'intérieur de la virole, donc d'assurer de manière aisée une homogénéité de température sur l'ensemble de la face extérieure du tambour.

En outre, de par son positionnement en regard de l'une des joues de la virole, l'au moins une bouche d'alimentation est agencée pour alimenter en liquide caloporteur l'intérieur de la virole du tambour, ce qui favorise encore l'agitation du volume de liquide caloporteur compris à l'intérieur de la virole, et donc l'homogénéisation de la température de ce volume de liquide caloporteur.

De plus, de par la structure de l'ensemble selon l'invention, un seul circuit, et donc une seule pompe, sont nécessaires pour introduire le liquide caloporteur à l'intérieur du tambour, et de la même façon, à l'intérieur du bac de refroidissement.

Par conséquent, lorsque l'ensemble de refroidissement selon l'invention est mis en place sur une ligne de production de grande capacité, une réduction significative de l'énergie consommée par la ligne de production est réalisée.

De préférence, l'au moins une bouche d'alimentation est agencée pour alimenter en liquide caloporteur simultanément l'intérieur de la virole du tambour et le bac de refroidissement.

De façon avantageuse, le liquide caloporteur contenu dans le bac de refroidissement est de l'eau.

En outre, l'ensemble selon l'invention permet l'utilisation d'un tambour dépourvu de canaux de circulation, et de dispositifs de pulvérisation, ce qui permet de réduire les coûts de fabrication du tambour.

De préférence, l'ensemble comporte un bac de rétention, et un circuit de circulation de liquide caloporteur comprenant au moins une conduite d'alimentation en liquide caloporteur reliant le bac de rétention au bac de refroidissement et agencée pour alimenter en liquide caloporteur le bac de refroidissement, et au moins une conduite de retour reliant le bac de refroidissement au bac de rétention et agencée pour refouler du liquide caloporteur contenu dans le bac de refroidissement vers le bac de rétention.

Avantageusement, le bac de rétention est disposé en dessous du bac de refroidissement. Ainsi, le liquide caloporteur destiné à alimenter l'ensemble tambour de refroidissement / bac de refroidissement est prélevé dans le bac de rétention situé immédiatement en dessous de l'ensemble, donc à proximité de celui-ci. Il en résulte un circuit extrêmement simple sans perte de charge inutile, sans joint tournant, et donc ne nécessitant qu'une pompe à consommation d'énergie faible.

De façon avantageuse, l'ensemble comporte un groupe frigorifique agencé pour refroidir un fluide caloporteur, et au moins un serpentin disposé dans le bac de rétention et dont les extrémités sont raccordées au groupe frigorifique de telle sorte que ledit fluide caloporteur puisse circuler dans ledit serpentin. Ces dispositions permettent de refroidir efficacement et simplement le liquide caloporteur destiné à alimenter le bac de refroidissement.

Le fluide caloporteur est, selon un mode de réalisation, du fréon.

Avantageusement, le circuit de circulation de liquide caloporteur comporte une pompe agencée pour alimenter en liquide caloporteur l'au moins une bouche d'alimentation.

Il convient de noter que la paroi intérieure de la virole peut présenter une rugosité de surface, et être pourvue d'une pluralité d'ailettes réparties sur sa surface, et de préférence régulièrement réparties sur sa surface. De façon avantageuse, la virole est réalisée en un métal ayant un haut coefficient de conductibilité thermique. Ces dispositions permettent d'améliorer l'efficacité du transfert thermique entre la face intérieure du ruban extrudé et l'eau contenue à l'intérieur de la virole du tambour.

De façon avantageuse, l'ensemble comporte des moyens d'entraînement en rotation agencés pour entraîner en rotation la virole autour d'un axe sensiblement horizontal.

De toute façon l'invention sera bien comprise à l'aide de la description qui suit en référence au dessin schématique annexé représentant, à titre d'exemple non limitatif, une forme d'exécution de cet ensemble de refroidissement.
Figure 1 est une vue schématique de côté d'un ensemble de refroidissement selon l'invention.
Figure 2 est une vue schématique en coupe de l'ensemble de refroidissement de la figure 1.

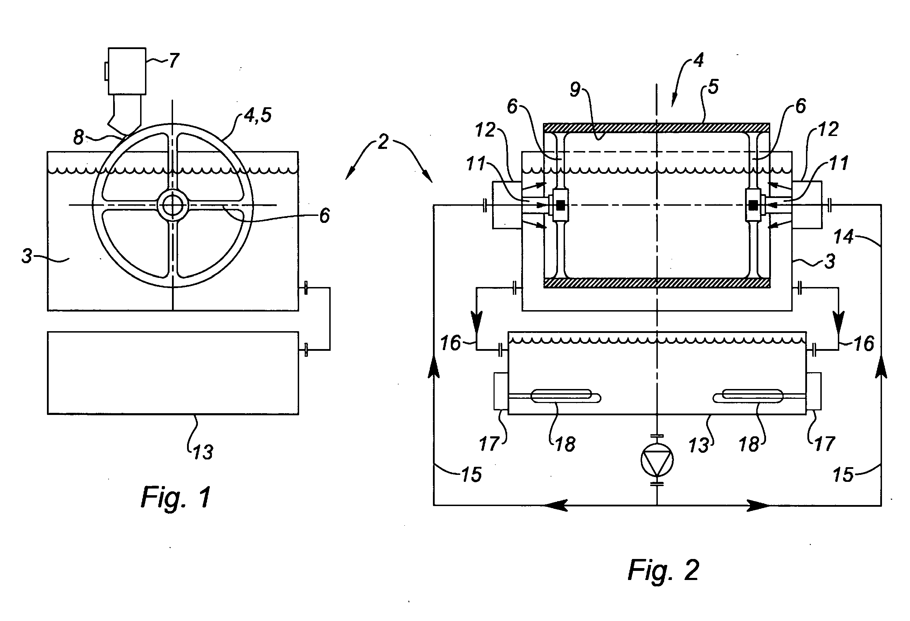

Les figures 1 et 2 représentent un ensemble de refroidissement 2 d'un film en matière synthétique. Un tel ensemble de refroidissement 2 est plus particulièrement destiné à être intégré à une ligne de production d'un film en matière synthétique et à être disposé entre une extrudeuse et une installation d'étirage d'une telle ligne de production.

Comme montré sur les figures, l'ensemble de refroidissement 2 comporte un bac de refroidissement 3 rempli en partie par un liquide caloporteur, telle que de l'eau, et un tambour de refroidissement 4 partiellement immergé dans le bac de refroidissement 3.

Le tambour de refroidissement 4 comprend une virole 5 présentant deux joues latérales 6 partiellement ajourées de telle sorte que l'intérieur de la virole 5 est partiellement rempli par le liquide caloporteur contenu dans le bac de refroidissement 3.

Comme montré plus particulièrement sur la figure 1, le tambour de refroidissement 4 est disposé en dessous d'une filière de conformation 7 d'un ruban extrudé 8 destiné à être refroidi par le tambour de refroidissement 4.

La virole 5 est avantageusement réalisée en un métal ayant un haut coefficient de conductibilité thermique. La paroi intérieure 9 de la virole présente de préférence une rugosité de surface, et pourrait également être pourvue d'une pluralité d'ailettes réparties sur sa surface, et de préférence régulièrement réparties sur sa surface.

L'ensemble de refroidissement 2 comporte des moyens d'entraînement en rotation agencés pour entraîner en rotation la virole 5 autour d'un axe sensiblement horizontal. Les moyens d'entraînement en rotation comportent de préférence deux arbres coaxiaux 11 liés chacun à l'une des joues 6 de la virole, et au moins un moteur d'entraînement (non représenté sur les figures) couplé à l'un des arbres.

Le bac de refroidissement 3 comporte deux bouches d'alimentation 12 en liquide caloporteur agencées pour alimenter en liquide caloporteur le bac de refroidissement. Chaque bouche d'alimentation 12 en liquide caloporteur est avantageusement située en regard de l'une des joues 6 de la virole 5.

L'ensemble de refroidissement 2 comprend en outre un bac de rétention 13 disposé en dessous du bac de refroidissement 3, et un circuit de circulation de liquide caloporteur 14 raccordé aux bacs de refroidissement 3 et de rétention 13. Le circuit de circulation de liquide caloporteur 14 comprend deux conduites d'alimentation en liquide caloporteur 15 reliant chacune le bac de rétention 13 au bac de refroidissement 3 et agencées pour alimenter en liquide caloporteur le bac de refroidissement 3, et deux conduites de retour 16 reliant chacune le bac de refroidissement 3 au bac de rétention 13 et agencées pour refouler du liquide caloporteur contenu dans le bac de refroidissement vers le bac de rétention.

L'ensemble de refroidissement 2 comporte également un groupe frigorifique 17 agencé pour refroidir un fluide caloporteur, et deux serpentins 18 disposés dans le bac de rétention 13 et dont les extrémités sont raccordées au groupe frigorifique 17 de telle sorte que ledit fluide caloporteur puisse circuler dans les deux serpentins.

Il doit être noté que le circuit de circulation de liquide caloporteur 14 comporte une pompe agencée pour alimenter en liquide caloporteur les deux conduites d'alimentation en liquide caloporteur 15 et les deux bouches d'alimentation 12.

Comme il va de soi, l'invention ne se limite pas à la seule forme d'exécution de cet ensemble de refroidissement, décrite ci-dessus à titre d'exemple, elle en embrasse au contraire toutes les variantes de réalisation.

## Revendications

1. Ensemble de refroidissement (2) d'un film en matière synthétique, comportant :
- un bac de refroidissement (3) rempli au moins en partie par un liquide caloporteur, et
- un tambour de refroidissement (4) au moins partiellement immergé dans le bac de refroidissement,
**caractérisé en ce que** le tambour de refroidissement comprend une virole (5) présentant deux joues latérales (6) au moins partiellement ajourées de telle sorte que l'intérieur de la virole est au moins partiellement rempli par le liquide caloporteur, et **en ce que** le bac de refroidissement (3) comporte au moins une bouche d'alimentation en liquide caloporteur (12) agencée pour alimenter en liquide caloporteur le bac de refroidissement, l'au moins une bouche d'alimentation en liquide caloporteur (12) étant située en regard de l'une des joues (6) de la virole (5).

2. Ensemble selon la revendication 1, **caractérisé en ce qu'**il comporte un bac de rétention (13), et un circuit de circulation de liquide caloporteur (14) comprenant au moins une conduite d'alimentation en liquide caloporteur (15) reliant le bac de rétention au bac de refroidissement et agencée pour alimenter en liquide caloporteur le bac de refroidissement, et au moins une conduite de retour (16) reliant le bac de refroidissement au bac de rétention et agencée pour refouler du liquide caloporteur contenu dans le bac de refroidissement vers le bac de rétention.

3. Ensemble selon la revendication 2, **caractérisé en ce que** le bac de rétention (13) est disposé en dessous du bac de refroidissement (3).

4. Ensemble selon la revendication 2 ou 3, **caractérisé en ce qu'**il comporte un groupe frigorifique (17) agencé pour refroidir un fluide caloporteur, et au moins un serpentin (18) disposé dans le bac de rétention (13) et dont les extrémités sont raccordées au groupe frigorifique de telle sorte que ledit fluide caloporteur puisse circuler dans ledit serpentin.

5. Ensemble selon l'une des revendications 2 à 4, **caractérisé en ce que** le circuit de circulation de liquide caloporteur (14) comporte une pompe agencée pour alimenter en liquide caloporteur l'au moins une bouche d'alimentation.

6. Ensemble selon l'une des revendications 1 à 5, **caractérisé en ce que** la paroi intérieure de la virole (5) présente une rugosité de surface.

7. Ensemble selon l'une des revendications 1 à 6, **caractérisé en ce que** la paroi intérieure de la virole (5) est pourvue d'une pluralité d'ailettes réparties sur sa surface, et de préférence régulièrement réparties sur sa surface.

8. Ensemble selon l'une des revendications 1 à 7, **caractérisé en ce que** la virole (5) est réalisée en un métal ayant un haut coefficient de conductibilité thermique.

9. Ensemble selon l'une des revendications 1 à 8, **caractérisé en ce que** le tambour de refroidissement (4) est immergé dans le bac de refroidissement (3) de telle sorte que le niveau de liquide dans le bac de refroidissement est situé au dessus de l'axe de rotation du tambour de refroidissement.

## Patentansprüche

1. Aufbau zum Kühlen (2) einer Folie aus Kunststoffmaterial, umfassend:
- einen Kühlbehälter (3), der zumindest teilweise mit einer Wärmeträgerflüssigkeit gefüllt ist, und
- eine Kühltrommel (4), die zumindest teilweise in den Kühlbehälter eingetaucht ist,
**dadurch gekennzeichnet, dass** die Kühltrommel einen Ring (5) umfasst, der zwei Seitenwangen (6) aufweist, die zumindest teilweise durchbrochen sind, sodass das Innere des Ringes zumindest teilweise mit der Wärmeträgerflüssigkeit gefüllt ist, und dadurch, dass der Kühlbehälter (3) zumindest eine Zuführöffnung für die Wärmeträgerflüssigkeit (12) umfasst, die angeordnet ist, um den Kühlbehälter mit Wärmeträgerflüssigkeit zu versorgen, wobei die zumindest eine Zuführöffnung für die Wärmeträgerflüssigkeit (12) gegenüber einer der Wangen (6) des Ringes (5) angeordnet ist.

2. Aufbau nach Anspruch 1, **dadurch gekennzeichnet, dass** er einen Auffangbehälter (13) und einen Kreislauf für den Umlauf der Wärmeträgerflüssigkeit (14) umfasst, der den Auffangbehälter mit dem Kühlbehälter verbindet, und so angeordnet ist, um den Kühlbehälter mit Wärmeträgerflüssigkeit (15) zu versorgen, sowie zumindest eine Rückführleitung (16), die den Kühlbehälter mit dem Auffangbehälter verbindet, und so angeordnet ist, um die im Kühlbehälter enthaltene Wärmeträgerflüssigkeit zum Auffangbehälter umzuwälzen.

3. Aufbau nach Anspruch 2, **dadurch gekennzeichnet, dass** der Auffangbehälter (13) unterhalb des Kühlbehälters (3) angeordnet ist.

4. Aufbau nach Anspruch 2 oder 3, **dadurch gekennzeichnet, dass** er ein Kühlaggregat (17) umfasst, das angeordnet ist, um die Wärmeträgerflüssigkeit zu kühlen, und zumindest eine Rohrschlange (18), die im Auffangbehälter (13) angeordnet ist, und deren Enden so mit dem Kühlaggregat verbunden sind, dass die besagte Wärmeträgerflüssigkeit durch die besagte Rohrschlange fließen kann.

5. Aufbau nach einem der Ansprüche 2 bis 4, **dadurch gekennzeichnet, dass** der Kreislauf für den Umlauf der Wärmeträgerflüssigkeit (14) eine Pumpe umfasst, die angeordnet ist, um die zumindest eine Zuführöffnung mit Wärmeträgerflüssigkeit zu versorgen.

6. Aufbau nach einem der Ansprüche 1 bis 5, **dadurch gekennzeichnet, dass** die Innenwand des Ringes (5) eine Oberflächenrauheit aufweist.

7. Aufbau nach einem der Ansprüche 1 bis 6, **dadurch gekennzeichnet, dass** die Innenwand des Ringes (5) mit einer Vielzahl von Schaufelblättern versehen ist, die über die Fläche verteilt, und vorzugsweise gleichförmig über die Fläche verteilt sind.

8. Aufbau nach einem der Ansprüche 1 bis 7, **dadurch gekennzeichnet, dass** der Ring (5) aus einem Metall mit einem hohen Wärmeleitfähigkeitsbeiwert gefertigt ist.

9. Aufbau nach einem der Ansprüche 1 bis 8, **dadurch gekennzeichnet, dass** die Kühltrommel (4) so in den Kühlbehälter (3) eingetaucht ist, dass der Flüssigkeitsfüllstand im Kühlbehälter oberhalb der Drehachse der Kühltrommel liegt.

## Claims

1. A cooling assembly (2) of a film of synthetic material, including:
- A cooling tank (3) filled at least partly by a heat-transfer liquid, and
- A cooling drum (4) at least partially immersed in the cooling tank,
**characterized in that** the cooling drum comprises a ferrule (5) having two side cheeks (6) at least partially perforated so that the inside of the ferrule is at least partially filled by the heat-transfer liquid, and **in that** the cooling tank (3) includes at least one feeding mouth with a heat-transfer liquid (12) arranged to feed the cooling tank with heat-transfer liquid, the at least one feeding mouth with a heat-transfer liquid (12) being located facing one of the cheeks (6) of the ferrule (5).

2. The assembly according to claim 1, **characterized in that** it includes a holding tank (13), and a circulation circuit of heat-transfer liquid (14) comprising at least one feeding line of heat-transfer liquid (15) connecting the holding tank to the cooling tank and arranged to feed the cooling tank with heat-transfer liquid, and at least one return line (16) connecting the cooling tank to the holding tank and arranged to discharge the heat-transfer liquid contained in the cooling tank towards the holding tank.

3. The assembly according to claim 2, **characterized in that** the holding tank (13) is disposed below the cooling tank (3).

4. The assembly according to claim 2 or 3, **characterized in that** it includes a refrigerating unit (17) arranged to cool a heat-transfer liquid, and at least one coil (18) disposed in the holding tank (13) and ends of which are connected to the refrigerating unit such that said heat-transfer liquid can flow in said coil.

5. The assembly according to any of claims 2 to 4, **characterized in that** the circulation circuit of heat-transfer liquid (14) includes a pump arranged to feed the at least one feeding mouth with heat-transfer liquid.

6. The assembly according to any of claims 1 to 5, **characterized in that** the inner wall of the ferrule (5) has a surface roughness.

7. The assembly according to any of claims 1 to 6, **characterized in that** the inner wall of the ferrule (5) is provided with a plurality of fins distributed over its surface, and preferably regularly distributed over its surface.

8. The assembly according to any of claims 1 to 7, **characterized in that** the ferrule (5) is made of a metal having a high coefficient of thermal conductivity.

9. The assembly according to any of claims 1 to 8, **characterized in that** the cooling drum (4) is immersed in the cooling tank (3) such that the liquid level in the cooling tank is located above the rotation axis of the cooling drum.
